Europäisches Patentamt

European Patent Office

Office européen des brevets

(19)

(11)  EP 0 765 731 A2

(12)  EUROPEAN PATENT APPLICATION

(43) Date of publication:
02.04.1997  Bulletin 1997/14

(51) Int Cl.⁶: **B29D 7/01**, B29C 47/00

(21) Application number: 96306981.0

(22) Date of filing: 25.09.1996

(84) Designated Contracting States:
**DE GB NL**

(30) Priority: **27.09.1995  JP 272060/95**

(71) Applicant: **KUREHA KAGAKU KOGYO KABUSHIKI KAISHA
Chuo-ku Tokyo 103 (JP)**

(72) Inventors:
• **Matsukura, Yoshihiro,
c/o Kureha Kagaku Kogyo K.K.
Tokyo 103 (JP)**
• **Ueyama, Takahisa,
c/o Kureha Kagaku Kogyo K.K.
Tokyo 103 (JP)**

(74) Representative: **Kyle, Diana
Elkington and Fife
Prospect House
8 Pembroke Road
Sevenoaks, Kent TN13 1XR (GB)**

(54)  **Thin film production process**

(57)    Films having a thickness on the order of 10 μm or smaller are effectively produced from a resin laminate (1) which has two major surfaces (1a,1b) and comprises a multiplicity of laminated layers of at least two resin species (A,B) including at least one resin species having a substantial solubility in a solvent and at least one resin species substantially insoluble in the solvent, the layers of said at least two resin species being laminated repetitively and obliquely to the two major surfaces (1a,1b) in at least one section perpendicular to the two major surfaces to form the resin laminate. The layers of resin species having a substantial solubility are selectively dissolved with the solvent to produce a plurality of isolated films of the substantially insoluble resin species at a time.

FIG. 2C

**Description**

## FIELD OF THE INVENTION AND RELATED ART

The present invention relates to a process for conveniently producing resin films having a thickness so small that they cannot be produced easily by conventional commercial resin film production processes, such as the T-die (tenter) process, the inflation process, etc.

Known commercial processes for producing resin films in an isolated form may include the T-die (tenter) process, the inflation process, etc. The lower limit of thickness of films obtained by these processes has been restricted to ca. 10 μm, and the commercial production of films having a smaller thickness has not been successful so far.

There has been recently proposed a process for conveniently producing films (or membranes) having a thickness generally smaller than 10 μm, wherein a laminate resin sheet comprising a plurality of resin layers having different solubilities in a solvent is provided and dipped in such a solvent to selectively dissolve the soluble resin layers and recover the non- or sparingly-soluble resin layers as thin films (U.S. Patent No. 4,874,568). However, the removal by dissolution of the soluble resin layers in this process depends on the penetration of the solvent from the laminate sheet edges having small surface areas, so that effective production of films is difficult. As a method of producing thinner films, there has been known the Langmuir-Blodget technique, but the technique is so complicated that a uniform film formation thereby requires a sophisticated control. Accordingly, it is difficult to say that the technique is suitable for commercial production of films.

## SUMMARY OF THE INVENTION

A principal object of the present invention is to provide a process for producing resin films, by which thin films having a thickness on the order of 10 pm or smaller can be produced effectively.

According to the present invention, there is provided a process for producing resin films, comprising the steps of:

providing a resin laminate which has two major surfaces and comprises a multiplicity of laminated layers of at least two resin species including at least one resin species having a substantial solubility in a solvent and at least one resin species substantially insoluble in the solvent, the layers of said at least two resin species being laminated repetitively and obliquely to the two major surfaces in at least one section perpendicular to the two major surfaces to form the resin laminate, and

selectively dissolving the layers of resin species having a substantial solubility with the solvent to produce a plurality of isolated films of the substantially insoluble resin species at a time.

In the film production process according to the present invention, the resin laminate in the form of a sheet or film (hereinafter sometimes inclusively referred to as a "laminate resin sheet" without an intention of restricting the thickness thereof) caused to be in contact with a solvent, has two major surfaces, to which the respective component resin layers are laminated obliquely and exposed, and which have much larger areas than the edge surfaces thereof, so that a solvent effectively penetrates into the layers of the the resin having a substantial solubility in the solvent (hereinafter sometimes referred to as a "soluble resin") to dissolve the layers. Further, as the resin layers are repetitively laminated, it is possible to obtain a plurality of isolated films of the substantially insoluble resin (hereinafter sometimes referred simply as an "insoluble resin") at a time, thus allowing effective production of resin films.

These and other objects, features and advantages of the present invention will become more apparent upon a consideration of the following description of the preferred embodiments of the present invention taken in conjunction with the accompanying drawings.

## BRIEF DESCRIPTION OF THE DRAWINGS

Figure 1A is a perspective view of a conventional laminate resin sheet, and Figures 1B and 1C are schematic views, of an MD section and a TD section, respectively, of the resin sheet.

Figure 2A is a perspective view of a laminate resin sheet used in an embodiment of the process of the present invention, Figures 2B and 2C are schematic views, of an MD section and a TD section, respectively, of the resin sheet, and Figure 2D is a schematic plan view of the resin sheet.

Figure 3A is a longitudinal sectional view of a conventional multi-layer spiral die and Figure 3B is a cross-sectional view of a product sheet obtained therefrom.

Figure 4A is a longitudinal sectional view of a spiral die suitable for production of a laminate resin sheet used in the present invention, and Figure 4B is a schematic circumferentially cross-sectional view of a product sheet obtained therefrom.

Figure 5 is a schematic perspective enlarged illustration of an essential part of the spiral die shown in Figure 4A.

## DESCRIPTION OF THE PREFERRED EMBODIMENTS

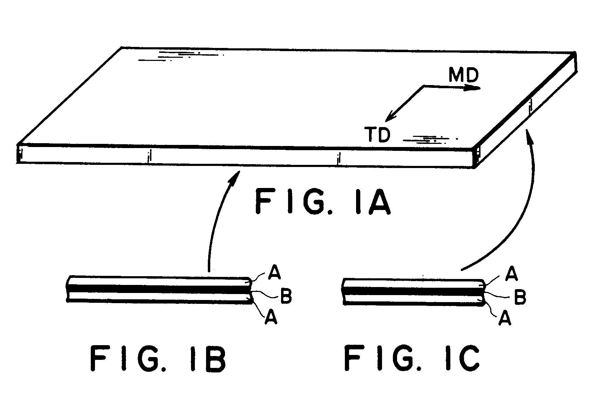

Figures 1A, 1B and 1C are a schematic perspective view, a partial sectional view in an MD direction parallel to a forming or extrusion axis, and a partial sectional view in a TD direction perpendicular to the forming or extrusion axis, respectively, of a conventional laminate resin sheet as used in the above-mentioned process of U.S. Patent No. 4,874,568, wherein the component resin layers A and B uniformly extend to the edges in parallel to the two major surfaces both in the MD and TD directions. Accordingly, only edge surfaces having a very small area can be used for contact with a solvent for dissolving a soluble resin B, so that the isolation of insoluble resin layers A by dissolution of the soluble resin layer B takes a long time.

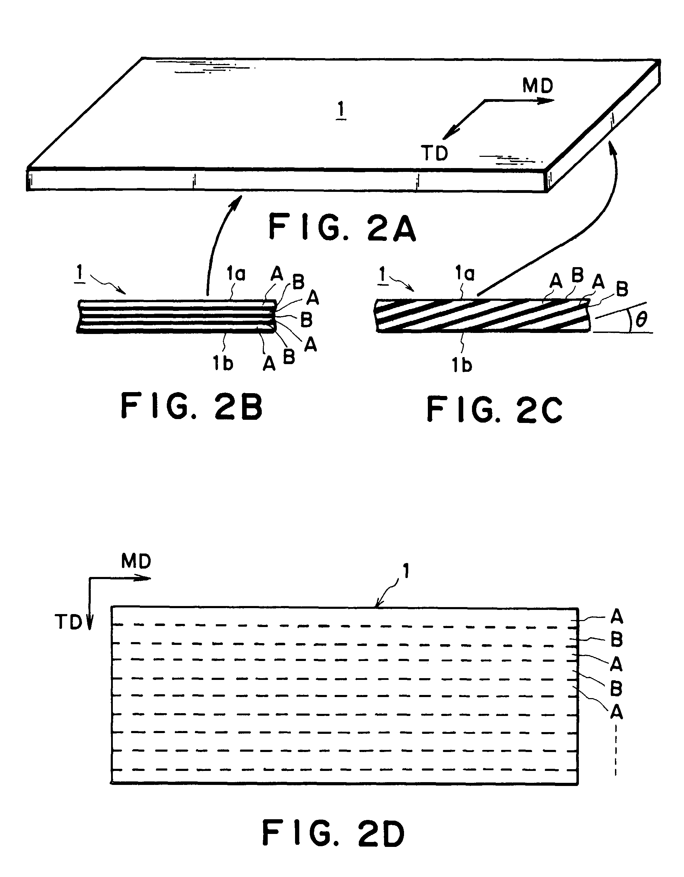

In contrast thereto, Figures 2A, 2B and 2C are a schematic sectional view, a partial sectional view in an MD direction and a partial sectional view in a TD direction, respectively, of a laminate resin sheet 1 as an embodiment of the resin laminate used in an embodiment of the process according to the present invention prepared by using a spiral die in a preferred example of process for producing the laminate resin sheet. As is clear from Figures 2B and 2C, the laminate resin sheet 1 has an MD section showing the resin layers A and B laminated alternately and parallel to the two major surfaces (Figure 2B) but has a TD section showing the resin layers A and B laminated alternately and obliquely so that the respective resin layers A and B reach the two major surfaces 1a and 1b of the laminate resin sheet 1 (Figure 2C). The individual resin layers A and B form with respect to the two major surfaces 1a and 1b an angle $\theta$, which however is not so large as shown in Figure 2C but may be in the range of larger than 0 deg. and at most 4 deg., particularly 0.001 - 0.4 deg. The angle $\theta$ may be calculated according to the following equation:

$$\tan\theta = [\text{sheet thickness (mm)}]/[\text{whole peripheral}$$

$$\text{length of the tubular sheet (mm) x spreading angle}$$

$$(\omega \text{ deg.})/360 \text{ deg.}]$$

(The spreading angle $\omega$ will be described hereinafter.)

In the process of the present invention, a laminate resin sheet as described above may be subjected to dipping in a solvent, or sprinkling, application or spraying of a solvent, etc., so as to cause at least one of the two major surfaces thereof to contact the solvent, thereby selectively dissolving and removing the soluble resin layers B to recover isolated films of the insoluble resin layer A.

Owing to a characteristic obliquely laminated structure of the laminate resin sheet as described with reference to Figures 2A - 2D, the soluble resin layers B and the insoluble resin layers A are alternately exposed to the two major surfaces having a much larger area than the edge surfaces thereof, so that the solvent contacting (or applied on) at least one major surface can effectively penetrate into the soluble resin layers B to allow quick removable by dissolution thereof. As a result, it is possible to obtain a plurality of films comprising the insoluble resin layers A respectively in an isolated form at a time.

In the above, a description has been made to an alternate lamination structure of two resin species insoluble resin A and soluble resin B (A/B/A/B/A/B ...). However, the order of the lamination can be arbitrarily selected, inclusive of repetition, such as A/B/B/A/B/B/A ... or A/B/B/A/A/B/B/A ..., e.g., for such two resins A and B. Such arbitrary order of lamination of the respective resin layers may be preferred to the alternate lamination in case of expecting an accelerated dissolution of the soluble resin layers B. In order to provide a laminate resin sheet having a uniform property as a whole, it is preferred to form a laminated resin product having a constant order of repetitive lamination. It is of course possible to form a laminate including three or more resin species. For example, three resin species A, B and C (A, C: insoluble resin, B: soluble resin) may be laminated, e.g., as follows:

(1) A/B/C/A/B/C/A ....,
(2) A/B/C/B/A/B/C/B/A ....
(3) A/B/A/B/C/A/B/A/B/C ...,
(4) B/C/A/B/C/B/C/A/B/C ...

For example, in the case of lamination mode (1), a plurality of laminate films each having a lamination structure of C/A can be obtained at a time by the selective dissolution of the soluble resin layers B. In the case of (2), each of two types of films A and C is respectively obtained in a plurality in an isolated form. In the case of (3), two types of films, i.e., films A and laminate films C/A, are respectively obtained in a plurality. In the case of (4), two types of films C and laminate films C/A are respectively obtained in a plurality.

Further, if desired, it is possible to use two or more soluble resin species in mixture or in lamination to control the solubility of the resultant composite soluble resin.

In the above embodiments, fine particles of, e.g., 0.1 - 5 $\mu$m in particle size (diameter) insoluble with the insoluble resin A and soluble in the solvent for the soluble resin B may be admixed in the insoluble resin layers A, so as to provide gas-permeable or liquid-permeable films of the insoluble resin A having micropores as traces of the fine particles after the selective dissolution of the resin layers B with the solvent. Alternatively, it is also possible to incorporate such fine particles in the insoluble resin layers A and, after the selective dissolution of the resin layers B, remove the fine particles from the isolated films A, e.g., by selective dissolution with another solvent. It is further possible to admix within the insoluble resin layers A a plasticizer or additive which is insoluble with the insoluble resin A and soluble in a solvent dissolving the soluble resin B and then effect the selective dissolution of the soluble resins B to provide films of the insoluble resin A having micropores therein.

Whether a specific resin is classified as a soluble resin B or an insoluble resin A (or C ...) (which need not be completely insoluble but can be sparingly soluble in order to be substantially insoluble as required herein) is, of course, determined in relation to a solvent used.

Some examples of combination of a soluble resin and a solvent (some denotes by abbreviations which will be described later) may include the following:

| Resin | Solvent |
|---|---|
| polyethylene | TCB, ODCB |
| polypropylene | TCB |
| ethylene-propylene rubber | TCB |
| ethylene-vinyl acetate copolymer | TCB |
| ethylene-methacrylic acid copolymer | TCB |
| ethylene-acrylic acid copolymer | TCB |
| ethylene-methyl methacrylate copolymer | TCB |
| polycarbonate | ODCB, TCB, dichloromethane, THF |
| polyester (PET) | HFIP, m-cresol |
| polybutene | TCB, toluene |
| polybutadiene | TCB, toluene, THF, chloroform, ODCB |
| polyisobutylene | TCB, toluene |
| styrene-butadiene rubber | TCB, toluene |
| saponified ethylene-vinyl acetate copolymer | DMSO |
| polyamide | dichloromethane, HFIP, TFA, m-cresol |

| | |
|---|---|
| polyisoprene | THF, toluene, chloroform |
| polyvinyl chloride | THF, TCB, toluene |
| polyvinyl fluoride | DMF |
| polysulfone | THF |
| polyurethane | DMF |
| polyvinyl alcohol | water |
| polymethyl methacrylate | chloroform |
| polyvinyl methyl ether | THF, DMF |
| polyvinyl acetate | THF, DMF |
| polyhydroxypolyether | DMSO |

The abbreviations for solvents stand for the following:

THF: tetrahydrofuran
DMSO: dimethylsulfoxide
TCB: 1,2,4-trichlorobenzene
DMF: dimethylformamide
ODCB: ortho-dichlorobenzene
TFA: trifluoroacetic acid
HFIP: hexafluoroisopropanol.

Next, an outline of the inflation process using a spiral die as a preferred process for producing the laminate resin sheet (which process per se is a subject of European Laid-Open Application (EP-A) 0703055 entitled "SPIRAL DIE AND LAMINATE PRODUCTION METHOD USING SAME") will be described.

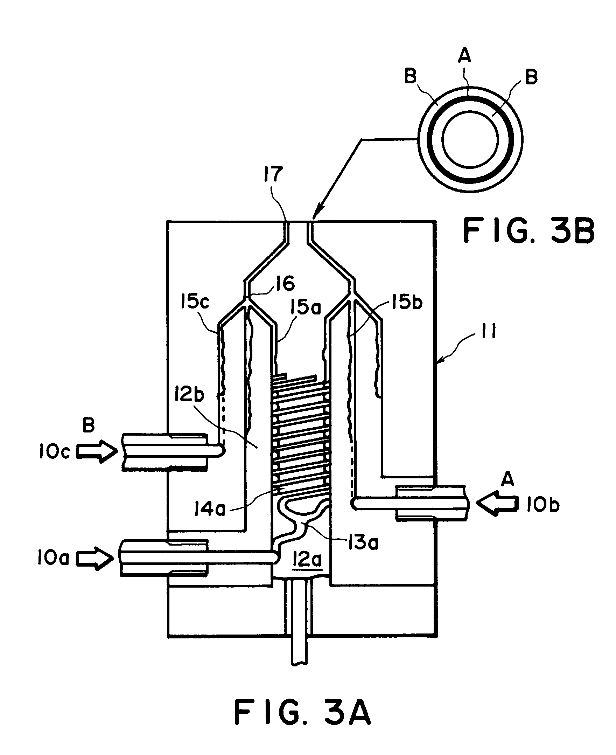

For comparison, a process using a spiral die for multi-layer laminate will be first described with reference to Figure 3A, which is a schematic longitudinal sectional view of a conventional spiral die for laminate production. Referring to Figure 3A, a resin B extruded from an extruder 10a (not illustrated) and introduced into a spiral die 11 is guided to a so-called (reverse) tournament-form manifold 13a (only one of a plurality thereof being shown) disposed in proximity with the outer periphery of a first die ring (innermost ring) 12a where the resin B is uniformly diverged and introduced into a plurality of spiral (flow) grooves 14a disposed on the outer periphery of the first die ring 12a. Each spiral groove has a depth which gradually decreases as it goes in the proceeding direction (generally upward). The resin B flowing along the spiral groove 14a spirally proceeds upwards while forming an overflowing or leakage stream at a spacing from a second die ring 12b until it flows upwards as a uniform axial tubular stream along a groove-free tubular path 15a to reach a joining point 16. On the other hand, a resin A extruded from an extruder 10b and introduced into the spiral die 11 is similarly diverged and caused to form an overflowing or leakage stream to consequently form a uniform axial tubular stream flowing through a tubular path 15b and reach the joining point 16. Further, a melted resin stream B extruded from an extruder 10c similarly is diverged, forms an overflowing or leakage stream and then forms a uniform axial tubular stream flowing through a tubular path 15c to reach the joining point 16. Then, at the joining point 16, these three tubular streams of melted resins B, A and B are laminated to be extruded through a die lip 17 to form a laminate tube. The laminate tube thus extruded out of the die lip 17 forms a laminated tubular product having a cross-section as shown in Figure 3B and comprising an intermediate layer of resin A sandwiched with layers of resin B. In the above, either one of the resins A and B is a soluble resin and the other is an insoluble resin.

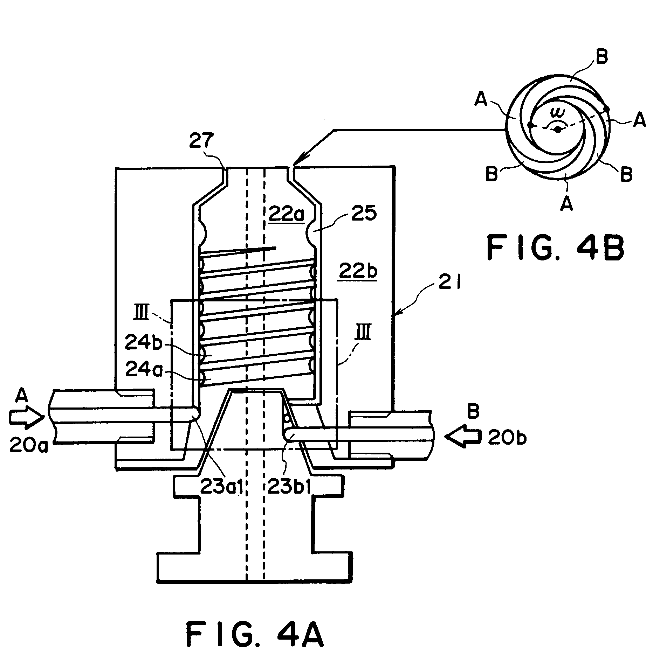

In contrast thereto, Figure 4A is a schematic sectional view of a spiral die 21 preferably used for producing a laminate resin sheet used in a process of the present invention. Streams of melted resins A and B extruded out of extruders 20a and 20b and introduced into the spiral die 21 are respectively diverged through (reverse) tournament-form manifolds (not shown but described hereinafter) each per se being similar to the one denoted by reference numeral 13a shown in Figure 3A and introduced into respective spiral grooves 24a and 24b each provided in a plurality. These melted resin streams A and B are then caused to flow along these spiral grooves as spiral streams accompanied with an overflowing stream and upwards through a single tubular path between an inner die ring 22a and an outer die ring 22b where the melted resin streams A and B are alternately laminated obliquely to flow through a groove-free tubular path 25 to be extruded through a die lip 27. The thus-extruded laminate tube forms a laminated tubular product having a circumferential cross-section (i.e., a cross-section in a transverse direction (TD) perpendicular to the extrusion axis) schematically as shown in Figure 4B wherein layers of the resin A and B are alternately laminated obliquely to the two major surfaces. Again, either one of the resins A and B is a soluble resin and the other is an insoluble resin.

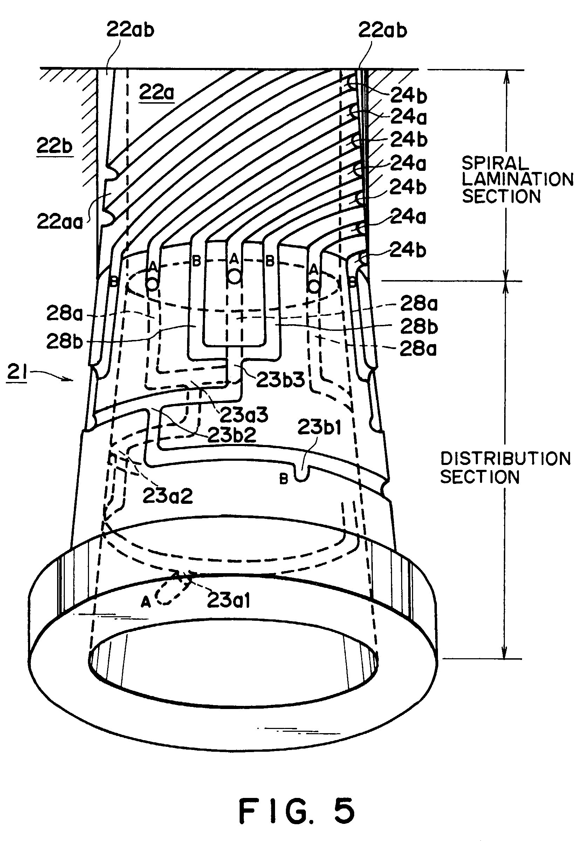

Figure 5 is a schematic perspective view of a part enclosed within a frame III drawn with a dot-and-dash line in Figure 4A for illustrating the manner of distribution-lamination of the melted resin streams A an B. Referring to Figure 5, the melted resin streams A and B extruded out of the extruders (20a and 20b in Figure 4A) and introduced into the spiral die 21 first reach tournament manifold points 23al and 23bl, from which the melted resin streams A and B are repeatedly diverged through manifold points 23a2, 23b2 ... and flow through final manifold points 23a3 and 23b3 to be introduced into final paths 28a, 28b, 28a, 28b ... in a distribution section. From the final paths 28a, 28b ..., the melted resin streams A and B are caused to alternately flow into spiral grooves 24a, 24b, 24a, 24b... Incidentally, the initial points of the spiral grooves 24a, 24b, 24a, 24b ... (i.e., the terminal points of the final paths 28a, 28b, 28a, 28b ... in the distribution section) may preferably be disposed substantially on an identical circular circumferential line on the inner die ring 22a. The melted resin streams A and B having entered the spiral grooves 24a and 24b initially exclusively proceed as spiral streams along the spiral grooves 24a and 24b but gradually form leakage streams overflowing spiral ridges 22aa of the inner die ring 22a and flow upwards in a path 22ab between the inner die ring 22a, particularly the spiral ridges 22aa thereof, and the outer die ring 22b. In other words, the melted resin streams A and B overflow out of the respective spiral grooves as if they form melted films flowing circumferentially. Then, the thus-formed flowing films of melted resins A and B are laminated to overlie the flowing films of melted resins B and A issued from the spiral grooves 24b and 24a, respectively, at the downstream side, i.e., so that the flowing films A and B alternately overlie each other to be laminated with each other. The angle of the lamination coincides with a spreading angle (Figure 4B) of each resin stream overflowing out of each spiral groove. More specifically, each resin stream forms an outer surface portion of the product laminate tube at the initial point of an associated spiral groove and gradually proceed toward the inner surface while being laminated or covered with other resin streams to reach the inner surface when it moves by the spreading angle . Thus, each of the melted resin steams A and B is laminated obliquely for a spreading angle (Figure 4B). The spreading angle can be controlled for each of the resins A and B by changing the initial depth, gradual thickness-reducing rate, etc., of the spiral groove 24a or 24b but may be in the range of generally 60 - 720 degrees, preferably 80 - 360 degrees, more preferably 130 - 230 degrees. In case where the spreading angle is below 60 degrees, the resultant laminate is liable to be accompanied with a thickness irregularity. On the other hand, above 720 degrees, the pressure in the spiral die at the time of the forming is liable to be excessive, so that the forming of the laminate becomes difficult.

Referring again to Figure 4A, the laminate tube extruded out of the die lip 27 may be optionally subjected to an inflation step for circumferentially enlarging and thinning the laminate and then shaped into a laminate resin sheet as shown in Figures 2A - 2D used in the present invention by slitting the tubular laminate ordinarily in a direction parallel to the forming axis.

In case where an extrusion process or an inflation process using a spiral die as described above as a preferred production process is considered, a plurality (n, a positive integer $\geqq 2$) of mutually different resin species (A, B, C ...) for lamination may preferably be 2 - 4. On the other hand, the number (m, a positive integer satisfying n < m) of spiral grooves, i.e., the total number of spiral grooves 24a, 24b, etc., may preferably be 4 - 256, further preferably 8 - 128, particularly preferably 16 - 64. Further, the number of thicknesswise laminated layers at a particular planar position of the laminate resin film may preferably be 4 - 100 layers, particularly 6 - 20 layers. The number of thicknesswise laminated layers may be calculated as $m \times \omega/360$ from the above-mentioned number of spiral grooves m and spreading angle $\omega$. The total thickness of the laminate resin product or laminated resin film may be controlled in a wide range, e. g., by using a melt-extruded parison as it is or controlling the degree of inflation (stretching ratio), and may for example be in the range of 10 μm - 1 mm, preferably 15 - 200 μm.

The resins A, B, ..., etc., used in the above-described process may desirably have a melt viscosity (as measured at 200 °C and 25 sec$^{-1}$) of 100 - 5000 Pa.s, preferably 300 - 2000 Pa.s, more preferably 400 - 1200 Pa.s.

According to the process of the present invention, it is generally possible to conveniently produce thin resin films having a well-controlled thickness on the order of 0.5 μm - 10 μm through the step of selective removal by dissolution of soluble resin layers.

Hereinbelow, some Examples and Comparative Example for thin film production will be described.

Example 1

A spiral die (m = 16) as shown in Figure 4A capable of alternately introducing and processing two species of resins A and B to form a multi-layer laminate of obliquely and alternately laminated resin layers A and B was used to simultaneously extrude the two species of resins into a tubular form, thereby forming an obliquely laminated multi-layer resin tube. The resin A used was ethylene-vinyl acetate copolymer modified by grafting with maleic anhydride ("MODIC E-300K" (available from Mitsubishi Kagaku K.K.) having a melt viscosity at 200 °C and 25 sec$^{-1}$ of 708 Pa.s, hereinafter indicated as "EVA"), and the resin B used was nylon 6 - nylon 12 copolymer ("AMILAN CM6541X3" (available from Toray K.K.) having a melt-viscosity at 200 °C and 25 sec$^{-1}$ of 814 Pa.s, hereinafter indicated as "6-12 Ny"). The laminated resin tube had a volume ratio of resin A/B of EVA/6-12Ny = 2/1, a total thickness of 180 µm, a number of laminate layers in thickness direction of 6 - 7 and a circular peripheral length of 300 mm.

The laminate resin sheet (tube) was biaxially stretched at 3x3 times (MDxTD) by inflation into a thickness of 20 µm.

The resultant inflated laminate resin sheet (tube) had a circular peripheral length of 900 mm and was then cut into a length of 150 mm in MD direction while in the form of the tube. The laminate sheet (tube) was dipped and held in a large excess of hexafluoroisopropanol solvent at 30 °C for 3 hours to completely dissolve the 6-12Ny layers, whereby 8 EVA films each in a thickness of ca. 2.2 µm, an MD-length of 150 mm and a TD-length of 375 mm were obtained simultaneously.

Example 2

A laminate resin sheet (tube) was prepared in the same manner as in Example 1 except for using, as the resin A, 6-12Ny (the same as one used in Example 1) and, as the resin B, ethylene vinyl acetate copolymer saponified product (indicated as EVOH"; "EVAL EPE 105A" (available from Kuraray K.K.) having an ethylene content of 44 mol. %, a saponification degree of 99.4 % and a melt-viscosity (at 200 °C, 25 sec$^{-1}$) of 901 Pa.s. The resultant laminate resin sheet (tube) had a volume ratio of A/B of 6-12Ny/EVOH = 2/1, a total thickness of 180 µm, a number of laminated layers in thickness direction of 6 - 7 and a peripheral length of 300 mm.

The laminate resin sheet (tube) was biaxially stretched at 3x3 times (MDxTD) by inflation into a thickness of 20 µm.

The inflated laminate resin sheet (tube) had a peripheral length of 900 mm, was cut into a length of 150 mm in MD direction while in the form of the tube and was dipped for 3 hours in a large excess of dimethylsulfoxide solvent at 30 °C to completely dissolve the EVOH layers, whereby 8 films of 6-12Ny each having a thickness of ca. 2.2 µm, an MD-length of 150 mm, and a TD-length of 375 mm were obtained simultaneously.

The die used in the above Examples 1 and 2 had the following features:

<Particulars of the spiral die>

| | |
|---|---|
| Number of spiral grooves | 16, |
| For resin A | 8, |
| For resin B | 8, |
| Number of spiral turns | 1.5, |
| Spiral pitch | 6.875 mm |
| Spiral pitch angle | 19.3 deg. |

Depth and width of spiral grooves

| | | depth (mm) | width (mm) |
|---|---|---|---|
| For resin A | initial | 10 | 5 |
| | terminal | 0 | 0 |
| For resin B | initial | 6.5 | 5 |
| | terminal | 0 | 0 |

Gap between a spiral ridge (on the inner die ring) and the outer die ring:

| | |
|---|---|
| initial | 0 mm |
| terminal | 1.5 mm |

Diameter of the inner die ring:

| initial | 100 mm |
|---------|--------|
| terminal | 97 mm |

## Example 3

A spiral die (m = 32) as shown in Figure 4A capable of alternately introducing and processing two species of resins A and B to form a multi-layer laminate of obliquely and alternately laminated resin layers A and B was used to simultaneously extrude the two species of resins into a tubular form, thereby forming an obliquely laminated multi-layer resin tube. The resin A used was 6-12Ny (the same as one used in Example 1), and the resin B was EVOH (the same as one used in Example 2). The laminated resin tube had a volume ratio of resin A/B of 6-12Ny/EVOH = 1/1, a total thickness of 140 µm, a number of laminate layers in thickness direction of 14 - 15 and a peripheral length of 300 mm.

The resultant laminate resin sheet (tube) had a peripheral length of 300 mm and was then cut into a length of 150 mm in MD direction while in the form of the tube. The laminate sheet (tube) was dipped and held in a large excess of dimethylsulfoxide solvent at 30 °C for 3 hours to completely dissolve the EVOH layers, whereby 16 films of 6-12Ny each having a thickness of ca. 10 µm, an MD-length of 150 mm and a TD-length of 133 mm were obtained simultaneously.

## Example 4

A laminate resin sheet (tube) was extruded in the same manner as in Example 3 except that the total thickness was changed to 180 µm. The laminate resin sheet (tube) was biaxially stretched at 3x3 times by inflation into a thickness of 20 µm.

The inflated laminate resin sheet (tube) had a peripheral length of 900 mm, was cut into a length of 150 mm in MD direction while in the form of the tube and was dipped for 3 hours in a large excess of dimethylsulfoxide solvent at 30 °C to completely dissolve the EVOH layers, whereby 16 films of 6-12Ny each having a thickness of ca. 1.3 µm, an MD-length of 150 mm, and a TD-length of 400 mm were obtained simultaneously.

## Example 5

A laminate resin sheet (tube) was prepared in the same manner as in Example 4 except for using, as the resin B, EVA (the same as one used in Example 1). The resultant laminate resin sheet (tube) had a volume ratio of A/B of 6-12Ny/EVA = 1/1, a total thickness of 180 µm, a number of laminated layers in thickness direction of 14 - 15 and a peripheral length of 300 mm.

The laminate resin sheet (tube) was biaxially stretched at 3x3 times (MDxTD) by inflation into a thickness of 20 µm.

The inflated laminate resin sheet (tube) had a peripheral length of 900 mm, was cut into a length of 150 in MD direction while in the form of the tube mm and was dipped for 3 hours in a large excess of 1,2,4-trichlorobenzene solvent heated at 130 °C to completely dissolve the EVA layers, whereby 16 films of 6-12Ny each having a thickness of ca. 1.3 µm, an MD-length of 150 mm, and a TD-length of 400 mm were obtained simultaneously.

The die used in the above Examples 3 - 5 had the following features:

<Particulars of the spiral die>

| Number of spiral grooves | 32, |
|--------------------------|-----|
| For resin A | 16, |
| For resin B | 16, |
| Number of spiral turns | 1, |
| Spiral pitch | 5.156 mm |
| Spiral pitch angle | 27.7 deg. |

Depth and width of spiral grooves

|  |  | depth (mm) | width (mm) |
|---|---|---|---|
| For resin A | initial | 5 | 3.5 |
|  | terminal | 0 | 0 |
| For resin B | initial | 5 | 3.5 |
|  | terminal | 0 | 0 |

Gap between a spiral ridge (on the inner die ring) and the outer die ring:

| initial | 0.5 mm |
|---|---|
| terminal | 1.25 mm |

Diameter of the inner die ring:

| initial | 100 mm |
|---|---|
| terminal | 97.5 mm |

[Melt-viscosity]

The melt-viscosities referred to herein are based on values measured in the following manner.

Measurement was made by using a rotational viscometer ("DSR", available from Rheometrics Co.) under the following conditions:

| Test temperature | 200 °C |
|---|---|
| Shear rate | 0.1 - 1000 sec$^{-1}$ |
| Geometry | parallel plates |
| Gap | 2 mm |

The melt viscosity values described herein were calculated at a shear rate of 25 sec$^{-1}$ based on the above measurement.

Comparative Example 1

Two species of resins A and B which were 6-12Ny and EVOH (the same as those used in Example 3) were simultaneously extruded through an ordinary spiral die capable of introducing and processing such two resins to produce a two-layer laminate sheet (tube) comprising the layers of the resins A (6-12Ny) and B (EVOH) each having a thickness of 90 μm were laminated parallel to the two major surfaces thereof.

The resultant laminate sheet (tube) had a peripheral length of 300 mm, was cut into a length of 150 mm in MD direction while in the form of the tube and was dipped for 3 hours in a large excess of dimethylsulfoxide solvent at 30 °C to completely dissolve the EVOH layer whereby a single tubular film of 6-12Ny having a thickness of ca. 90 μm, an MD-length of 150 mm and a TD-length of 300 mm was obtained.

Comparative Example 2

A laminate sheet (tube) prepared in Comparative Example 1 was biaxially stretched at 3x3 times (MDxTD) by inflation to form a 20 μm-thick inflated laminate resin sheet (tube) including a 6-12Ny layer and an EVOH layer respectively in a thickness of 10 μm for comparison with the one of Example 4.

The inflated laminate sheet (tube) had a peripheral length of 900 mm, was cut into a length of 150 mm in MD direction while in the form of the tube and was dipped for 3 hours in a large excess of dimethylsulfoxide solvent at 30 °C to completely dissolve the EVOH layer whereby a single tubular film of 6-12Ny having a thickness of ca. 10 μm, an MD-length of 150 mm and a TD-length of 900 mm was obtained.

Incidentally, the respective resins in the above-described Examples (1 - 5) and Comparative Examples (1 - 2) were extruded under the conditions shown in Table 1 below. Further, Table 2 below summarizes the spiral die parameters, the solvent and outlines of the laminate and product films in the respective Examples.

Table 1

| Sheet production conditions (Extrusion step) | | | | | | | | |
|---|---|---|---|---|---|---|---|---|
| | Extruder set temp. (°C) | | | | | Die set temp. (°C) | | |
| | C1 | C2 | C3 | C4 | AD | D1 | D2 | D3 |
| Examples for resin A for resin B | 170 170 | 180 180 | 190 190 | 190 190 | 190 190 | 200 | 200 | 200 |
| Comp.Examples for 6-12Ny for EVOH | 170 170 | 180 180 | 190 190 | 190 190 | 190 190 | 200 | 200 | 200 |
| Die outlet resin temperature: 206 °C | | | | | | | | |

Table 2

| | Ex. 1 | Ex. 2 | Ex. 3 | Ex. 4 | Ex. 5 | Comp. Ex. 1 | Comp. Ex. 2 |
|---|---|---|---|---|---|---|---|
| Composition Resin A | EVA | 6-12Ny | 6-12Ny | 6-12Ny | 6-12Ny | 6-12Ny | 6-12Ny |
| Resin B | 6-12Ny | EVOH | EVOH | EVOH | EVA | EVOH | EVOH |
| Total thickness (μm) Before stretching | 180 | 180 | 140 | 180 | 180 | 180 | 180 |
| After stretching | 20 | 20 | - | 20 | 20 | - | 20 |
| Number of spiral die grooves Total | 16 | 16 | 32 | 32 | 32 | - | - |
| for resin A | 8 | 8 | 16 | 16 | 16 | - | - |
| for resin B | 8 | 8 | 16 | 16 | 16 | - | - |
| Number of laminated layers | 6 - 7 | 6 - 7 | 14 - 15 | 14 - 15 | 14 - 15 | 2 | 2 |
| Solvent | HFIP | DMSO | DMSO | DMSO | TCB | DMSO | DMSO |
| Product film | EVA | 6-12Ny | 6-12Ny | 6-12Ny | 6-12Ny | 6-12Ny | 6-12Ny |
| Number of sheets | 8 | 8 | 16 | 16 | 16 | 1 | 1 |
| Thickness (μm) | 2.2 | 2.2 | 10 | 1.3 | 1.3 | 90 | 10 |
| TD-length | 375 | 375 | 133 | 400 | 400 | 300 | 900 |
| Resin volumeration Resin A:Resin B | 2:1 | 2:1 | 1:1 | 1:1 | 1:1 | 1:1 | 1:1 |
| Spreading angle (ω deg.) | 150 | 150 | 160 | 160 | 160 | - | - |
| θ (deg.) in Fig. 2C | 0.003 | 0.003 | 0.06 | 0.002 | 0.002 | - | - |

As shown in Table 2, compared with Comparative Examples 1 and 2 wherein only one sheet of film was prepared in a thickness of 10 μm or 90 μm, Examples 1 - 5 according to the present invention provides 1.3 to 10 μm-thick films were effectively produced in 8 - 16 sheets each in a single dissolution step.

**Claims**

1.  A process for producing resin films, comprising the steps of:

    providing a resin laminate which has two major surfaces and comprises a multiplicity of laminated layers of at least two resin species including at least one resin species having a substantial solubility in a solvent and at least one resin species substantially insoluble in the solvent, the layers of said at least two resin species being laminated repetitively and obliquely to the two major surfaces in at least one section perpendicular to the two major surfaces to form the resin laminate, and
    selectively dissolving the layers of resin species having a substantial solubility with the solvent to produce a plurality of isolated films of the substantially insoluble resin species at a time.

2.  A process according to Claim 1, wherein said multiplicity of laminated layers are inclined at an inclination angle of at most 4 degrees with respect to the two major surfaces.

3.  A process according to Claim 1 or 2, wherein said resin laminated is provided in a tubular form and then subjected to the selective dissolution while being in a tubular form.

4.  A process according to Claims 1 - 3, further including a step of stretching the resin laminate prior to the selective dissolution step.

5.  A process according to any preceding claim, wherein said resin laminate includes adjacent layers of at least two resin species, which are respectively substantially insoluble in the solvent, and provides a laminate film including said layers of at least two resin species after the selective dissolution step.

6.  A process according to any one of Claims 1 - 4, wherein said resin laminate includes separate layers of at least two resin species, which are respectively substantially insoluble to the solvent, and provides separate films of said at least two resin species after the selective dissolution step.

7.  A process according to any preceding claim, wherein said layers of the substantially insoluble resin include fine particles which are insoluble with the insoluble resin, and the fine particles are removed from the isolated films of the substantially insoluble resin during or after the selective dissolution step to provide permeable films of the substantially insoluble resin.

8.  A process according to any preceding claim, wherein said resin laminate has been formed by extrusion of said at least two resin species simultaneously through a spiral die allowing mutually overflowing lamination of said at least two resin species.

MD

TD

FIG. IA

A
B
A

FIG. IB

A
B
A

FIG. IC

14

FIG. 2A

FIG. 2B

FIG. 2C

FIG. 2D

FIG. 3B

FIG. 3A

27

22a    25

22b

21

III

24b

24a

III

A

20a

B

20b

23a1   23b1

B

A    w    A

B    B

A

# FIG. 4B

# FIG. 4A

FIG. 5